# EUROPEAN PATENT SPECIFICATION

(11) **EP 3 668 360 B1**
(45) Date of publication and mention of the grant of the patent: **29.12.2021**
(21) Application number: 18880462.9
(22) Date of filing: 15.11.2018
(51) Int. Cl.: A47J 43/04, A47J 43/08, A47J 43/07

(54) **CHAOTIC HAND MIXER**
CHAOTISCHER HANDRÜHRER
MÉLANGEUR MANUEL CHAOTIQUE

(30) Priority: 22.11.2017 TR 201718563
(43) Date of publication of application: 24.06.2020
(73) Proprietor: Yasar Universitesi, 35100 Izmir (TR); Izmir Katip Celebi Universitesi, 35620 Çigli/Izmir (TR)
(72) Inventor: GUZELIS, Cuneyt, 35160 Buca/Izmir (TR); GENC, Seda, 35100 Bornova/Izmir (TR); UZEL, Ruhan Askin, 35100 Bornova/Izmir (TR); SAHIN, Savas, Izmir (TR); DEMIRKIRAN, Gokhan, 35100 Izmir (TR); IZMIR, Tolga Tugay, 35100 Bornova/Izmir (TR)
(74) Representative: Kayahan, Senem
(86) International application number: PCT/TR2018/050688
(87) International publication number: WO 2019/103718

(56) References cited:
- WO-A1-2017/161800
- DE-A1-102015 216 678
- DE-U1-202014 101 885
- KR-U- 20110 002 889
- US-A- 5 664 733
- US-A1- 2009 213 685

## Description

### TECHNICAL FlELD OF THE INVENTION

The invention relates to a hand mixer that can be used in mixing food products in a chaotic way.

### PRIOR ART

Emulsified food products are generally produced by using constant speed hand mixer devices with gradual speed options (ranging from low to high constant speed settings). With this method, mixing process is continued until emulsion is achieved at a chosen constant speed. Mixing time for food products varies depending on the type of product, viscosity and quantity. The constant speed mixers used complete the mixing process by consuming a lot of energy in a long period of time.

In the state of the art, constant speed mixers, chaotic mixers with industrial propellers and chaotic mixers operated by a pump are provided.

With regard to the subject, the patent document with the number US5921679 A is included. In the mentioned patent document, chaotic mixing of fluids contained in a tank is described. The document DE102015216678 discloses a hand mixer.

### BRI EF DESCRI PTI ON OF THE I NVENTI ON

The present invention is related to a chaotic hand mixer intended for eliminating the aforementioned disadvantages and introducing new advantages to the respective technical field.

The objective of the invention is to mix emulsified food products in shorter time with less energy compared to constant speed mixers.

The present invention is related to a chaotic hand mixer, which allows chaotic mixing of food products, in order to achieve all the foregoing and all the objects of the following detailed description. The present invention includes the features provided in claim 1.

Another embodiment of the invention comprises a control card which drives the DC motor gradually from slow to fast at the beginning of the mixing.

### BRIEF DESCRIPTION OF THE DRAWINGS

In Figure 1, the elements of the chaotic hand mixer and the connection diagram are given.

In Figure 2, the graph showing the change in the viscosity of the emulsified food product (mayonnaise) according to the mixing type is given.

In Figure 3, the shear rate and shear stress graphs for chaotic and classical mixing types are given.

### REFERENCE NUMBERS

- 1.: Chaotic hand mixer
- 2.: Propeller
- 3.: DC motor
- 4.: Socket
- 5.: Control card
- 6.: Button

### DETAILED DESCRIPTION OF THE INVENTION

In this detailed description, the innovation according to the invention is explained with the examples intended only for a better understanding of the invention without constituting any limiting effect. The chaotic hand mixer (1) which provides chaotic mixing of food products and its features are described.

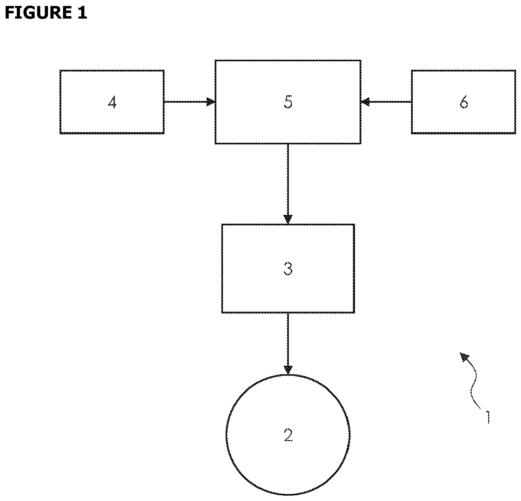

Referring to Figure 1, the propeller (2), the DC (Direct Current) motor (3) to which the propeller (2) is connected, the socket (4) that powers the DC motor (3), the microcontroller-based electronic control card (5) that drives the DC motor (3), and the button (6) for selecting mixer's operation mode and setting the speed of the DC motor (3) are illustrated. The propeller (2) provides homogeneous mixing of the emulsified food product. The DC motor (3) rotates the propellers. The DC motor (3) is driven by the signals produced by the control board (5). These signals provide chaotic mixing of the food product. In this context, the DC motor (3) can be operated at variable speeds. The control card (5) can also operate the DC motor (3) at constant speeds. These two settings are called chaotic mode and constant speed mode. The selection between chaotic and constant speeds and the mixing speed adjustments are performed by means of the buttons (6).

The chaotic signal is chosen as logistic transformation (Logistic Map: x^{k+1} = ax^{k}(1-x^{k})) that can be realized on a small sized microprocessor considering the size of the chaotic hand mixer (1). The logistic transformation was performed on the microprocessor located on the control card (5). This processor is also used to generate the pulse width modulation (PWM) input signal of the DC motor (3). A single control card (5) is provided where a microprocessor is present alongside a motor drive unit (MOSFET) with a heat sink on. The control board (5) is manufactured in dimensions such that it can be embedded in the chaotic hand mixer (1).

In another embodiment of the invention, a control board (5) is provided which drives the DC motor (3) gradually from slow to fast at the start of the mixing process. Running the DC motor (3) at low speeds during the initial start-up and the constant speed adjustment are fulfilled by the control card without requiring diode-capacity, adjustable resistance etc.

The chaotic hand mixer, whose basic elements are described above, works as follows. It is aimed to create turbulence in the emulsified food product by operating the chaotic hand mixer (1) at speeds varying in a chaotic manner with the help of the control card (5). Thus, by means of the present invention, emulsion is achieved in a shorter time and by consuming less electrical energy.

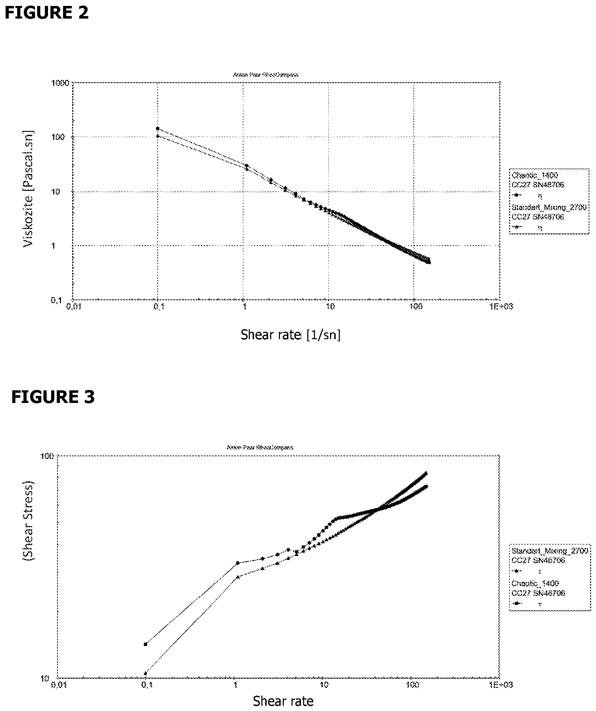

With the present invention, it is aimed to create turbulence in the emulsified food product instead of the system comprising a constant-speed hand mixer which requires a long mixing process. As a result of the rheological measurements (shear rate, shear stress and viscosity) conducted with a rheometer for mayonnaise, it was observed that emulsion was obtained in a shorter time with the chaotic hand mixer according to the invention. At the same time, electrical energy consumption was also reduced, resulting in higher energy efficiency compared to a conventional constant speed mixer. It was observed that the viscosity characteristics obtained with the so called constant speed mixing method by mixing at a speed of 930 rpm (revolutions per minute) for 2700 seconds (45 minutes), was achieved with chaotic mixing at the same average speed in just 1400 seconds (23.33 minutes) and even spending less energy (19400 Joules compared to 37500 Joules). The viscosity measurements and the shear rate and shear stress measurements were carried out using Anton Paar MCR302 Modular Compact Rheometer Device and the related results are provided in Figure 2 and Figure 3 respectively. As a result of these tests, it was observed that, for chaotic mixing with the same average speed and consequently same power consumption as conventional mixing, approximately the same viscosity, shear rate and shear stress characteristics were obtained in half the time required for conventional mixing.

## Claims

1. A chaotic hand mixer (1) for chaotic mixing of food products comprising at least one propeller (2) for mixing of food products, at least one DC motor (3) for rotating the propeller (2), a socket (4) for powering the DC motor (3), **characterized in that** it comprises a control card (5) performing
logistic map to generate chaotic signal for driving the DC motor (3) by means of a chaotic signal or a constant speed signal and at least one button (6) which allows selection of operation settings between a chaotic mode and a constant speed mode and adaptation of the DC motor's (3) speed.

2. A chaotic hand mixer according to Claim 1, **characterized in that** it includes a control board (5) for driving the DC motor (3) gradually from slow to fast at the beginning of the mixing process.

## Patentansprüche

1. Chaotischer Handmixer (1) zum chaotischen Mischen von Lebensmitteln mit mindestens einem Propeller (2) zum Mixen von Lebensmitteln, mindestens einem Gleichstrommotor (3), um den Propeller (2) anzutreiben, einer Steckdose (4) für die Stromversorgung des Gleichstrommotors (3), **dadurch gekennzeichnet, dass** diese über eine Steuerkarte (5) verfügt, die eine Logistikkarte erzeugt, um chaotisches Signals zum Antrieb des Gleichstrommotors (3) mittels eines chaotischen Signals oder eines konstanten Geschwindigkeitssignals zu generieren und mindestens einer Taste (6), die die Auswahl der Betriebseinstellungen zwischen einem chaotischen Modus und einem Modus von konstanter Geschwindigkeit ermöglicht, als auch die Anpassung der Geschwindigkeit des Gleichstrommotors (3) ermöglicht.

2. Chaotischer Handmixer gemäß Anspruch 1, **dadurch gekennzeichnet, dass** er eine Steuerplatine (5) enthält, die dafür dient, den Gleichstrommotor (3) beim Beginnen des Mixvorgangs gleichmäßig von langsam auf schnell anzutreiben.

## Revendications

1. Mélangeur manuel chaotique (1) pour le mélange chaotique de produits alimentaires comprenant au moins une hélice (2) pour le mélange de produits alimentaires, au moins un moteur CC (3) pour faire tourner l'hélice (2), une prise (4) pour alimenter le moteur CC (3), **caractérisé en ce qu'**il comprend une carte de commande (5) réalisant une carte logistique pour générer un signal chaotique pour entraîner le moteur CC (3) au moyen d'un signal chaotique ou d'un signal à vitesse constante et au moins un bouton (6) qui permet la sélection des paramètres opératoires entre un mode chaotique et un mode à vitesse constante et l'adaptation de la vitesse du moteur CC (3).

2. Mélangeur manuel chaotique selon la revendication 1, **caractérisé en ce qu'**il comprend une carte de commande (5) pour entraîner le moteur CC (3) progressivement de lent à rapide au début du processus de mélange.
